# FASCICULE DE BREVET EUROPEEN

(11) **EP 0 940 070 B1**
(45) Date de publication et mention de la délivrance du brevet: **06.11.2002**
(21) Numéro de dépôt: 99440041.4
(22) Date de dépôt: 02.03.1999
(51) Int. Cl.: A01C 7/04, A01C 7/08

(54) **Semoir**
Sähmaschine
Sowing machine

(30) Priorité: 03.03.1998 FR 9802804
(43) Date de publication de la demande: 08.09.1999
(73) Titulaire: Kuhn-Nodet S.A., 77876 Montereau (FR)
(72) Inventeur: Audigie, Jean-Charles, 89340 Villeneuve la Guyard (FR)
(74) Mandataire: Andres, Jean-Claude

(56) Documents cités:
- DE-A- 3 513 739
- DE-A- 3 535 813
- GB-A- 2 106 763

## Description

La présente invention se rapporte à un semoir comportant :
- un châssis ;
- au moins une trémie ;
- au moins un élément d'implantation ;
- un premier dispositif de soufflerie contenant un premier ventilateur solidaire d'un premier arbre et animé en rotation autour de ce dernier au moyen d'une transmission primaire ;
- un deuxième dispositif de soufflerie contenant un deuxième ventilateur solidaire d'un deuxième arbre et animé en rotation autour de ce dernier au moyen d'une transmission secondaire, l'axe longitudinal dudit deuxième arbre étant au moins sensiblement parallèle à l'axe longitudinal dudit premier arbre.

On connaît un tel semoir qui est un semoir de précision monograine comportant dans les grandes lignes :
- un châssis destiné à être attelé à un véhicule moteur ;
- une trémie centrale destinée à contenir une première matière comme par exemple un produit fertilisant ;
- une pluralité d'éléments d'implantation comprenant :
   * une pluralité d'éléments semeurs destinés à implanter la semence dans le sol, liés audit châssis et équipés chacun d'une trémie destinée à contenir la semence ;
   * une pluralité de socs liés également audit châssis et destinés chacun à implanter le produit fertilisant dans le sol.
- un premier dispositif de soufflerie ; et
- un deuxième dispositif de soufflerie.

Le premier dispositif de soufflerie est destiné à créer une dépression qui est nécessaire pour la distribution des graines dans chaque élément semeur. A cet effet, le premier dispositif de soufflerie comporte un premier ventilateur solidaire d'un premier arbre et animé en rotation autour de ce dernier au moyen d'une transmission primaire laquelle reçoit elle-même le mouvement du véhicule moteur au moyen d'un arbre de transmission.

Le deuxième dispositif de soufflerie est destiné, quant à lui, à créer un flux d'air permettant de transporter le produit fertilisant de la trémie centrale jusqu'aux socs. A cet effet, le deuxième dispositif de soufflerie comporte un deuxième ventilateur solidaire d'un deuxième arbre et animé en rotation au moyen d'un moteur hydraulique alimenté directement par la centrale hydraulique du véhicule moteur.

Pour obtenir un transport correct du produit fertilisant jusqu'aux socs, il faut un débit d'air assez important et régulier ce qui veut dire que le deuxième ventilateur du deuxième dispositif de soufflerie doit être animé en rotation à une vitesse assez importante et régulière. Cette vitesse de rotation du deuxième ventilateur dépend directement de la centrale hydraulique du véhicule moteur ce qui nécessite obligatoirement un véhicule moteur d'un certain gabarit avec une centrale hydraulique relativement puissante.

Pour remédier à cette contrainte, ce semoir connu est également proposé avec une transmission hydraulique propre. A cet effet est prévue une pompe hydraulique qui est entraînée par le premier arbre solidaire du premier ventilateur et qui est destinée à alimenter le moteur hydraulique lequel anime ensuite en rotation le deuxième ventilateur. Cette transmission hydraulique fait également appel à un réservoir destiné à contenir le fluide hydraulique et un certain nombre de composants hydrauliques qui sont nécessaires à une telle transmission hydraulique.

Un tel semoir ne dépend donc plus de la puissance hydraulique du véhicule moteur.

Les composants hydrauliques étant des éléments assez chers et assez fragiles font que ce semoir connu reste un semoir assez onéreux. En outre, une transmission hydraulique du type pompe-moteur est une transmission très peu rentable et assez bruyante.

Le but de la présente invention est de remédier aux inconvénients de ce semoir connu, tout en veillant à obtenir une réalisation simple.

A cet effet, le semoir selon la présente invention est caractérisé en ce que la transmission secondaire est une transmission mécanique sans fin.

L'invention concerne également les caractéristiques suivantes considérées isolément ou dans toutes leurs combinaisons techniquement possibles :
- la transmission secondaire comporte :
   * une première roue solidaire du premier arbre ;
   * une deuxième roue solidaire du deuxième arbre ; et
   * au moins un élément de transmission secondaire assurant la transmission de ladite première roue à ladite deuxième roue.
- la première roue de la transmission secondaire est diamétralement plus grande que la deuxième roue de ladite transmission secondaire, ce qui permet avantageusement de faire tourner ladite deuxième roue à une vitesse de rotation supérieure à celle de ladite première roue ;
- la deuxième roue de la transmission secondaire est fixée à l'une des extrémités du deuxième arbre et le deuxième ventilateur est fixé à l'autre extrémité dudit deuxième arbre, la première roue de ladite transmission secondaire est quant à elle fixée à l'autre extrémité du premier arbre ce qui permet notamment le démontage de l'élément de transmission secondaire relativement facilement et rapidement sans avoir au préalable à démonter une multitude d'autres éléments gênants ;
- la transmission primaire est une transmission mécanique sans fin comportant :
   * une première roue solidaire d'un troisième arbre destiné à être animé en rotation au moyen d'une source motrice extérieure ;
   * une deuxième roue solidaire du premier arbre, et
   * au moins un élément de transmission primaire assurant la transmission de ladite première roue à ladite deuxième roue ;
- la première roue de la transmission primaire est diamétralement plus grande que la deuxième roue de ladite transmission primaire ce qui permet avantageusement de faire tourner ladite deuxième roue à une vitesse de rotation supérieure à celle de ladite première roue ;
- la première roue de la transmission primaire peut être déplacée au moins sensiblement orthogonalement à l'axe longitudinal du premier arbre au moyen d'un premier dispositif de réglage de manière à éloigner ou rapprocher ladite première roue de la deuxième roue de ladite transmission primaire ce qui permet avantageusement de tendre l'élément de transmission primaire pour assurer son bon fonctionnement ou au contraire de le détendre en vu de son démontage ;
- le premier ventilateur est fixé à l'une des extrémités du premier arbre et la deuxième roue de la transmission primaire est située entre la première roue de la transmission secondaire et ledit premier ventilateur ;
- le deuxième ventilateur est diamétralement plus petit que le premier ventilateur ;
- le deuxième ventilateur est situé dans le proche voisinage du premier ventilateur de manière à obtenir un ensemble relativement compact peu encombrant ;
- le premier ventilateur comporte un flasque et des ailettes s'étendant d'un côté dudit flasque ;
- le deuxième ventilateur comporte un flasque et des ailettes s'étendant des deux côtés dudit flasque ce qui permet notamment d'avoir un débit d'air important tout en ayant une nuisance sonore relativement faible ;
- le premier dispositif de soufflerie comporte un demi-carter fixé sur une première paroi de manière que le premier ventilateur s'étende entre ledit demi-carter et ladite première paroi ;
- la première paroi, le demi-carter du premier dispositif de soufflerie, le premier ventilateur avec le deuxième palier forment un ensemble fixé sur le châssis au moyen d'éléments de fixation ce qui permet avantageusement de démonter et de remonter ledit ensemble relativement facilement et rapidement ;
- le deuxième dispositif de soufflerie comporte un demi-carter fixé sur une deuxième paroi de manière que le deuxième ventilateur s'étende entre ledit demi-carter et ladite deuxième paroi ;
- la deuxième paroi, le demi-carter du deuxième dispositif de soufflerie et le deuxième ventilateur forment un ensemble fixé au châssis au moyen d'éléments de fixation ce qui permet avantageusement de démonter et de remonter ledit ensemble relativement facilement et rapidement ;
- l'ensemble formé par la deuxième paroi, le demi-carter du deuxième dispositif de soufflerie et le deuxième ventilateur peut être déplacé au moins sensiblement orthogonalement à l'axe longitudinal de premier arbre au moyen d'un deuxième dispositif de réglage de manière à éloigner ou rapprocher ledit ensemble dudit premier arbre ce qui permet avantageusement de tendre l'élément de transmission secondaire pour assurer son bon fonctionnement ou au contraire de le détendre en vu de son démontage.

D'autres objets et caractéristiques de l'invention ressortiront de la description ci-après avec références aux dessins annexés qui représentent, à titre d'exemple non limitatif, une forme de réalisation du dispositif selon l'invention.

Sur ces dessins,
- la figure 1 représente une vue de côté du semoir selon l'invention lié à un véhicule moteur ;
- la figure 2 représente une vue suivant la flèche II définie sur la figure 1 sur laquelle ont été effectuées quelques coupes partielles ;
- la figure 3 représente un agrandissement partiel de la figure 1 montrant plus précisément le premier et le deuxième dispositifs de soufflerie du semoir en coupe.

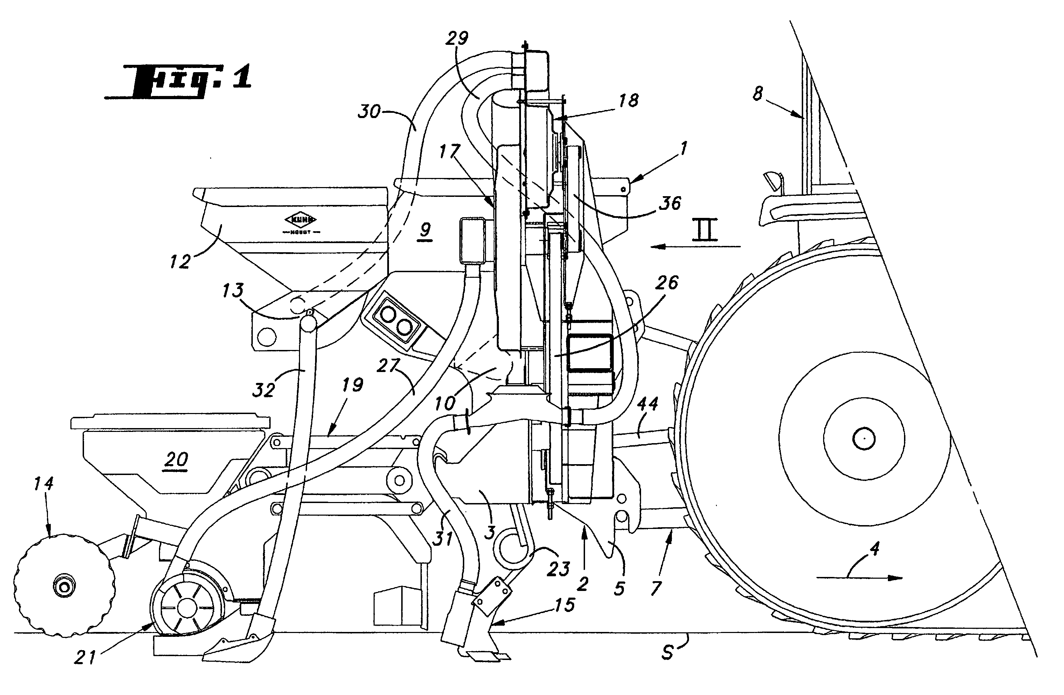

A la lumière de la figure 1, on voit un semoir (1) qui est en fait un semoir de précision monograine. Ce semoir (1) comporte selon l'exemple de réalisation représenté :
- un châssis (2) comprenant une poutre principale (3) s'étendant orthogonalement à la direction d'avance (4) et une structure d'attelage (5) qui est liée à un dispositif d'attelage (7) d'un véhicule moteur (8) ;
- une première trémie (9) destinée à contenir un produit fertilisant et à la base de laquelle est prévu un premier dispositif de dosage (10) destiné à doser ledit produit fertilisant ;
- une deuxième trémie (12) destinée à contenir un produit d'addition et à la base de laquelle est prévu un deuxième dispositif de dosage (13) destiné à doser ledit produit d'addition ;
- une pluralité d'éléments d'implantation (14, 15) répartis régulièrement le long de la poutre principale (3) ;
- un premier dispositif de soufflerie (17) destiné à créer une dépression d'air ; et
- un deuxième dispositif de soufflerie (18) destiné à créer un flux d'air.

Les éléments d'implantation (14, 15) sont destinés à implanter le produit fertilisant, le produit d'addition et la semence dans le sol (S). A cet effet, les éléments d'implantation (14, 15) comportent d'une part une pluralité d'éléments semeurs (14) destinés à implanter, selon l'exemple de réalisation représenté, la semence et le produit d'addition dans le sol (S) et d'autre part une pluralité de socs (15) destinés à implanter le produit fertilisant dans le sol (S).

Chaque élément semeur (14) est lié à la poutre principale (3) au moyen d'un parallélogramme déformable (19) permettant audit élément semeur (14) de suivre les irrégularités du sol (S).

Chaque élément semeur (14) comporte une troisième trémie (20) destinée à contenir la semence et à la base de laquelle est prévu un troisième dispositif de dosage (21) destiné à doser la semence. Ce dispositif de dosage (21) est un dispositif de dosage individuel des graines de semence et nécessite une dépression d'air.

Ce dispositif de dosage (21) est largement connu par l'homme du métier et ne sera donc pas décrit davantage.

Chaque soc (15) est quant à lui lié à la poutre principale (3) au moyen d'un dispositif de liaison (23) correspondant.

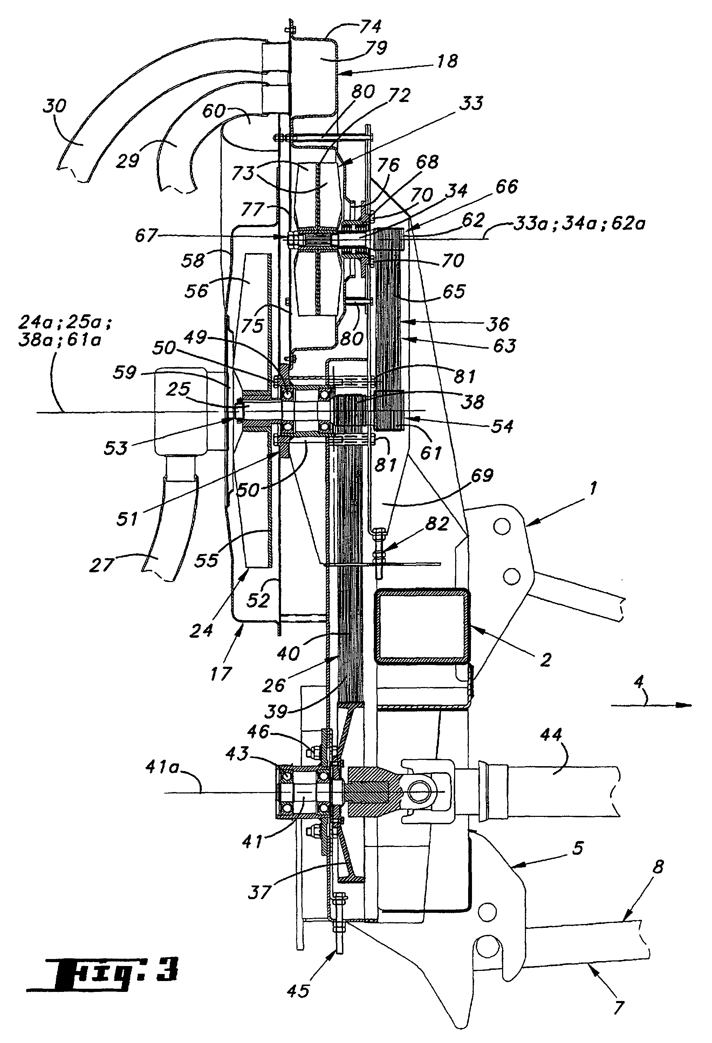

La dépression d'air nécessaire pour doser la semence est réalisée au moyen du premier dispositif de soufflerie (17). A cet effet, on voit à la lumière de la figure 3 que le premier dispositif de soufflerie (17) comporte un premier ventilateur (24) solidaire d'un premier arbre (25) d'axe longitudinal (25a) et animé en rotation autour de ce dernier au moyen d'une transmission primaire (26). Cette dépression d'air est acheminée du premier dispositif de soufflerie (17) à chaque élément semeur (14) au moyen d'un premier tuyau souple (27) respectif lié d'une part audit dispositif de soufflerie (17) et d'autre part audit élément semeur (14) correspondant tel que représenté sur la figure 1.

Le flux d'air créé par le deuxième dispositif de soufflerie (18) sert à transporter le produit fertilisant de la première trémie (9) vers les socs (15) et le produit d'addition de la deuxième trémie (12) vers les éléments semeurs (14).

A cet effet, le flux d'air créé par le deuxième dispositif de soufflerie (18) est acheminé de ce dernier vers le premier dispositif de dosage (10) au moyen d'un deuxième tuyau souple (29) et vers le deuxième dispositif de dosage (13) au moyen d'un troisième tuyau souple (30), lesdits deuxième et troisième tuyaux (29, 30) étant de diamètre assez conséquent.

A partir du premier dispositif de dosage (10), le flux d'air créé par le deuxième dispositif de soufflerie (18) est acheminé avec le produit fertilisant dosé vers chaque soc (15) au moyen d'un quatrième tuyau souple (31) respectif. A partir du deuxième dispositif de dosage (13), le flux d'air créé par le deuxième dispositif de soufflerie (18) est acheminé avec le produit d'addition dosé vers chaque élément semeur (14) au moyen d'un cinquième tuyau souple (32) respectif. Lesdits premier, quatrième et cinquième tuyaux souples (27, 31, 32) étant de diamètre inférieur aux deuxième et troisième tuyaux souples (29, 30).

Le flux d'air nécessaire pour transporter le produit fertilisant et le produit d'addition est réalisé au moyen du deuxième dispositif de soufflerie (18). A cet effet, on voit à la lumière de la figure 3 que le deuxième dispositif de soufflerie (18) comporte un deuxième ventilateur (33) solidaire d'un deuxième arbre (34) d'axe longitudinal (34a) et animé en rotation autour de ce dernier au moyen d'une transmission secondaire (36).

La transmission primaire (26) est une transmission mécanique sans fin comportant une première roue (37), une deuxième roue (38) et un élément de transmission primaire (39) qui est, selon l'exemple de réalisation représenté, une première courroie (40) à stries.

La première roue (37) est fixée sur un troisième arbre (41) d'axe longitudinal (41a) au moins sensiblement horizontal et dirigé suivant la direction d'avance (4). Ce troisième arbre (41) est guidé en rotation dans le châssis (2) au moyen d'un premier palier (43) et est entraîné en rotation au moyen d'une source motrice extérieure qui est, selon l'exemple de réalisation représenté, un arbre de transmission à joints universels (44) lié et entraîné en rotation par le véhicule moteur (8). La deuxième roue (38), quant à elle, est solidaire du premier arbre (25) et l'axe longitudinal (25a) de ce dernier est au moins sensiblement parallèle à l'axe longitudinal (41a) du troisième arbre (41). On notera encore que le premier arbre (25) est situé plus haut que le troisième arbre (41) et que selon une vue de dessus, la première roue (37) et la deuxième roue (38) sont au moins sensiblement alignées de manière à assurer un bon fonctionnement de la transmission primaire (26).

On notera encore que la première roue (37) est diamétralement plus grande que la deuxième roue (38) de manière à augmenter la vitesse de rotation du premier arbre (25) par rapport à la vitesse de rotation du troisième arbre (41).

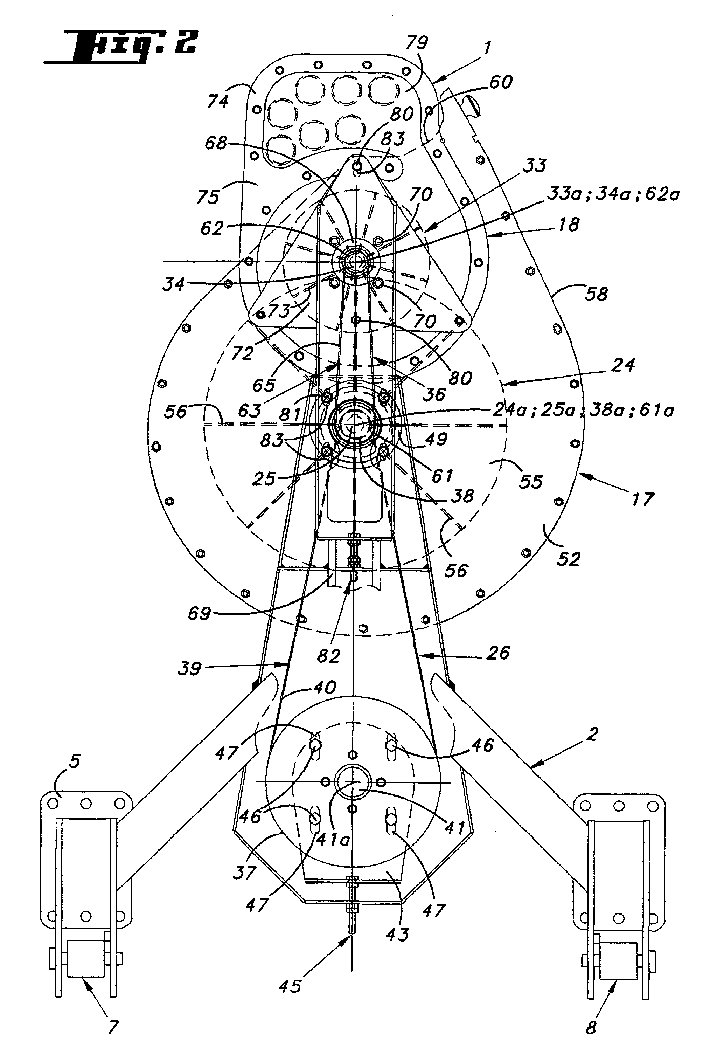

A la lumière de la figure 3, on voit en sus que la première roue (37) de la transmission primaire (26) peut être déplacée au moins sensiblement orthogonalement à l'axe longitudinal (25a) du premier arbre (25) au moyen d'un premier dispositif de réglage (45) de manière à éloigner ou rapprocher ladite première roue (37) de la deuxième roue (38) ce qui permet de tendre ou de détendre la première courroie (40). A cet effet, on remarquera que le palier (43) est fixé sur le châssis (2) au moyen de quatre vis (46) s'étendant chacune au travers d'un trou oblong (47) respectif prévu dans ledit châssis (2) tel que représenté sur la figure 2. Chaque trou oblong (47) est dirigé au moins sensiblement verticalement en direction du premier arbre (25) ce qui permet de déplacer le palier (43), le troisième arbre (41) et la première roue (37) au moyen du premier dispositif de réglage (45) qui est composé selon l'exemple de réalisation représenté, d'un système vis-écrou.

Le premier arbre (25) est quant à lui guidé en rotation dans un deuxième palier (49) fixé au châssis (2) au moyen de quatre vis (50) supplémentaires. A l'extrémité extérieure (51) du deuxième palier (49) est fixée une première paroi (52) s'étendant au moins sensiblement verticalement.

Le premier ventilateur (24) est fixé à l'une (53) des extrémités (53, 54) du premier arbre (25) et il comporte un flasque (55) et des ailettes (56) s'étendant d'un côté dudit flasque (55), à savoir du côté opposé à la première paroi (52). On notera encore que le deuxième palier (49) est situé entre le ventilateur (24) et la deuxième roue (38) de la transmission primaire (26) tel que représenté sur la figure 3.

Il apparaît encore à la lumière de la figure 3, que le premier dispositif de soufflerie (17) comporte un demi-carter (58) fixé sur la première paroi (52) de manière que le premier ventilateur (24) s'étende entre le demi-carter (58) et la première paroi (52). Sensiblement au milieu du demi-carter (58) est prévue une ouverture centrale (59) par laquelle l'air est aspiré lorsque le premier ventilateur est animé en rotation et sur laquelle est branché chaque premier tuyau souple (27). Pour assurer l'évacuation de l'air aspiré par l'ouverture centrale (59), le demi-carter (58) comporte en sus une ouverture périphérique (60) sur laquelle est prévu un volet réglable (non représenté) permettant d'obstruer plus ou moins ladite ouverture périphérique (60). En ouvrant plus ou moins l'ouverture périphérique (60) au moyen du volet réglable, cela permet avantageusement de varier l'intensité de l'aspiration du premier dispositif de soufflerie (17).

A la lumière de la figure 3, on voit en sus que la première paroi (52), le demi-carter (58) du premier dispositif de soufflerie (17) et le premier ventilateur (24) forment un ensemble fixé sur le châssis (2) au moyen d'éléments de fixation composés, selon l'exemple de réalisation représenté, des quatre vis (50).

La transmission secondaire (36) quant à elle, qui permet d'animer en rotation le deuxième ventilateur (33), est également une transmission mécanique sans fin. Cette transmission secondaire (36) comporte une première roue (61), une deuxième roue (62) et un élément de transmission secondaire (63) qui est, selon l'exemple de réalisation représenté, une deuxième courroie (65) à stries assurant la transmission de ladite première roue (61) à ladite deuxième roue (62). La première roue (61) est solidaire du premier arbre (25) et est diamétralement plus grande que la deuxième roue (62) de la transmission secondaire (36) ce qui permet d'augmenter la vitesse de rotation du deuxième arbre (34) par rapport à la vitesse de rotation dudit premier arbre (25). A la lumière de la figure 3, on voit en sus que la première roue (61) de la transmission secondaire (36) est située à l'autre extrémité (54) du premier arbre (25), ce qui permet avantageusement un montage et un démontage de la deuxième courroie (65) sans avoir à intervenir sur une multitude d'autres éléments.

La deuxième roue (38) de la transmission primaire (26) est donc située entre le deuxième palier (49) et la première roue (61) de la transmission secondaire (36). On notera en sus que les axes longitudinaux (24a, 25a, 38a, 61a) du premier ventilateur (24), du premier arbre (25), de la deuxième roue (38) de la transmission primaire (26) et de la première roue (61) de la transmission secondaire (36) sont au moins sensiblement confondus. La deuxième roue (62) de la transmission secondaire (36) est solidaire avec le deuxième arbre (34) et est située à l'une (66) des extrémités (66, 67) dudit deuxième arbre (34) tandis que le deuxième ventilateur (33) est fixé à l'autre extrémité (67) dudit deuxième arbre (34).

Ce deuxième arbre (34) est guidé en rotation dans un troisième palier (68) fixé à une structure support (69) au moyen de quatre vis (70). Ce troisième palier (68) est situé, selon l'exemple de réalisation représenté, entre la deuxième roue (62) et la transmission secondaire (36) et le deuxième ventilateur (33). On notera que les axes longitudinaux (34a, 33a, 62a) du deuxième arbre (34), du deuxième ventilateur (33) et de la deuxième roue (62) de la transmission secondaire (36) sont au moins sensiblement confondus.

Selon une vue de dessus, on remarquera encore que les axes longitudinaux (25a, 34a, 41a) du premier arbre (25), du deuxième arbre (34) et du troisième arbre (41) sont également confondus.

On notera également que le deuxième arbre (34) est situé plus haut que le premier arbre (25) et que selon une vue de dessus, la première roue (61) et la deuxième roue (62) de la transmission secondaire (36) sont au moins sensiblement alignées de manière à assurer un bon fonctionnement de ladite transmission secondaire (36).

Le deuxième ventilateur (33) est, selon l'exemple représenté, diamétralement plus petit que le premier ventilateur (24) et il est situé dans le proche voisinage dudit premier ventilateur (24). Ce deuxième ventilateur (33) comporte un flasque (72) et des ailettes (73) s'étendant des deux côtés dudit flasque (72).

A la lumière de la figure 3, on voit que le deuxième dispositif de soufflerie (18) comporte un demi-carter (74) fixé sur une deuxième paroi (75) de manière que le deuxième ventilateur (33) s'étende entre le demi-carter (74) et ladite deuxième paroi (75). Cette deuxième paroi (75) est au moins sensiblement parallèle à la première paroi (52). Sensiblement au milieu du demi-carter (74) du deuxième dispositif de soufflerie (18) est prévue une ouverture centrale (76) et sensiblement au niveau de l'axe longitudinal (34a) du deuxième arbre (34) est prévue une autre ouverture (77) dans la deuxième paroi (75). Ces deux ouvertures (76, 77) permettent le passage de l'air qui est aspiré lorsque le deuxième ventilateur (33) est animé en rotation. En aspirant de l'air par l'ouverture centrale (76) et l'autre ouverture (77), le deuxième ventilateur (33) souffle de l'air dans un collecteur (79) prévu à cet effet sur lequel est branché chaque deuxième et troisième tuyaux souples (29, 30).

Pour varier le flux d'air soufflé dans le collecteur (79), il est prévu un volet (non représenté) au niveau des ouvertures (76, 77) permettant d'obstruer plus ou moins lesdites ouvertures (76, 77).

La deuxième paroi (75) est fixée directement ou indirectement à la structure support (69) au moyen d'éléments de fixation (80) tels que représentés sur la figure 3.

A la lumière de la figure 3, on voit encore que la deuxième paroi (75), le demi-carter (74) fixé à cette dernière, la structure support (69), le deuxième ventilateur (33) et le troisième palier (68) forment un ensemble (75, 74, 69, 33, 68) fixé sur le châssis (2) et à la première paroi (52) au moyen d'éléments de fixation composés, selon l'exemple de réalisation représenté de quatre vis (81) et d'un des éléments de fixation (80). Cet ensemble (75, 74, 69, 33, 68) peut être déplacé au moins sensiblement orthogonalement à l'axe longitudinal (25a) du premier arbre (25) au moyen d'un deuxième dispositif de réglage (82) de manière à éloigner ou rapprocher ledit ensemble (75, 74, 69, 33, 68) dudit premier arbre (25) ce qui permet de tendre ou de détendre la deuxième courroie (65). A cet effet, on remarquera que chaque vis (81) et l'élément de fixation (80) s'étend au travers d'un trou oblong (83) respectif prévu soit dans la structure support (69) ou dans la deuxième paroi (52) tel que représenté sur la figure 2. Chaque trou oblong (83) est dirigé au moins sensiblement verticalement en direction du premier arbre (25) ce qui permet de déplacer l'ensemble (75, 74, 69, 33, 68) tel que décrit ci-dessus au moyen du deuxième dispositif de réglage (82). Selon l'exemple de réalisation représenté, ce deuxième dispositif de réglage (82) est composé d'un système vis-écrou.

On notera également que cet ensemble (75, 74, 69, 33, 68), comprenant la deuxième paroi (75), le demi-carter (74) fixé à cette dernière, la structure support (69), le deuxième ventilateur (33) et le troisième palier (68), peut facilement être démonté du châssis (2) et de la première paroi (52) en enlevant tout simplement les quatre vis (81) et l'élément de fixation (80) correspondant et en déposant la deuxième courroie (65).

On remarquera encore que cet ensemble (75, 74, 69, 33, 68), en l'occurrence le deuxième dispositif de soufflerie (18), forme un ensemble rapporté et qu'il peut être déposé sans que cela ne perturbe le bon fonctionnement du premier dispositif de soufflerie (17). Un tel agencement permet également d'équiper un semoir de précision monograine déjà sur le marché.

Lors du fonctionnement, le véhicule moteur (8) entraîne en rotation l'arbre de transmission à joints universels (44), lequel entraîne la première roue (37) de la transmission primaire (26). Ladite première roue (37) transmet le mouvement de rotation à la deuxième roue (38) de la transmission primaire (26) au moyen de la première courroie (40) ce qui permet d'entraîner en rotation le premier arbre (25) et donc le premier ventilateur (24) et la première roue (61) de la transmission secondaire (36). Ladite première roue (61) transmet le mouvement de rotation à la deuxième roue (62) de la transmission secondaire (36) au moyen de la deuxième courroie (65) ce qui permet d'entraîner en rotation le deuxième arbre (34) et donc le deuxième ventilateur (33).

Finalement, diverses modifications peuvent être apportées à l'exemple qui vient d'être décrit, notamment en ce qui concerne la constitution des divers éléments ou par substitution d'équivalents techniques, sans pour autant sortir du domaine de protection.

C'est ainsi qu'il est parfaitement possible que chaque élément de transmission primaire ou secondaire (39, 63) soit composé de plusieurs courroies.

Il est également possible que le ou les courroies qui composent un élément de transmission (39, 63) soient de type différent de celui décrit précédemment.

Il est également possible qu'un élément de transmission (39, 63) soit composé d'une chaîne.

## Revendications

1. Semoir comportant :
- un châssis (2) ;
- au moins une trémie (9, 12, 20) ;
- au moins un élément d'implantation (14, 15) ;
- un premier dispositif de soufflerie (17) contenant un premier ventilateur (24) solidaire d'un premier arbre (25) d'axe longitudinal (25a) et animé en rotation autour de ce dernier au moyen d'une transmission primaire (26) ;
- un deuxième dispositif de soufflerie (18) contenant un deuxième ventilateur (33) solidaire d'un deuxième arbre (34) d'axe longitudinal (34a) et animé en rotation autour de ce dernier au moyen d'une transmission secondaire (36), l'axe longitudinal (34a) dudit deuxième arbre (34) étant au moins sensiblement parallèle à l'axe longitudinal (25a) dudit premier arbre (25) ;
***caractérisé en ce* que** ladite transmission secondaire (36) est une transmission mécanique sans fin.

2. Semoir selon la revendication 1, ***caractérisé en ce* que** la transmission secondaire (36) comporte :
- une première roue (61) solidaire du premier arbre (25) ;
- une deuxième roue (62) solidaire du deuxième arbre (34) ; et
- au moins un élément de transmission secondaire (63) assurant la transmission de ladite première roue (61) à ladite deuxième roue (62).

3. Semoir selon la revendication 2, ***caractérisé en ce* que** la première roue (61) de la transmission secondaire (36) est diamétralement plus grande que la deuxième roue (62) de ladite transmission secondaire (36).

4. Semoir selon la revendication 2 ou 3, ***caractérisé en ce* que** la deuxième roue (62) de la transmission secondaire (36) est fixée à l'une (66) des extrémités (66, 67) du deuxième arbre (34) et que le deuxième ventilateur (33) est fixé à l'autre extrémité (67) dudit deuxième arbre (34).

5. Semoir selon l'une quelconque des revendications 2 à 4, ***caractérisé en ce* que** la première roue (61) de la transmission secondaire (36) est fixée à une autre extrémité (54) du premier arbre (25).

6. Semoir selon l'une quelconque des revendications 1 à 5, ***caractérisé en ce* que** la transmission primaire (26) est une transmission mécanique sans fin comportant :
- une première roue (37) solidaire d'un troisième arbre (41) destiné à être animé en rotation au moyen d'une source motrice extérieure ;
- une deuxième roue (38) solidaire du premier arbre (25) ; et
- au moins un élément de transmission primaire (39) assurant la transmission de ladite première roue (37) à ladite deuxième roue (38).

7. Semoir selon la revendication 6, ***caractérisé en ce* que** la première roue (37) de la transmission primaire (26) est diamétralement plus grande que la deuxième roue (38) de ladite transmission primaire (26).

8. Semoir selon la revendication 6 ou 7, ***caractérisé en ce* que** la première roue (37) de la transmission primaire (26) peut être déplacée au moins sensiblement orthogonalement à l'axe longitudinal (25a) du premier arbre (25) au moyen d'un premier dispositif de réglage (45) de manière à éloigner ou rapprocher ladite première roue (37) de la deuxième roue (38) de ladite transmission primaire (26).

9. Semoir selon la revendication 5 et l'une quelconque des revendications 6 à 8, ***caractérisé en ce* que** le premier ventilateur (24) est fixé à l'une (53) des extrémités (53, 54) du premier arbre (25) et que la deuxième roue (38) de la transmission primaire (26) est située entre la première roue (61) de la transmission secondaire (36) et ledit premier ventilateur (24).

10. Semoir selon l'une quelconque des revendications 1 à 9, ***caractérisé en ce* que** le deuxième ventilateur (33) est diamétralement plus petit que le premier ventilateur (24).

11. Semoir selon l'une quelconque des revendications 1 à 10, ***caractérisé en ce* que** le deuxième ventilateur (33) est situé dans le proche voisinage du premier ventilateur (24).

12. Semoir selon l'une quelconque des revendications 1 à 11, ***caractérisé en ce* que** le premier ventilateur (24) comporte un flasque (55) et des ailettes (56) s'étendant d'un côté dudit flasque (55).

13. Semoir selon l'une quelconque des revendications 1 à 12, ***caractérisé en ce* que** le deuxième ventilateur (33) comporte un flasque (72) et des ailettes (73) s'étendant des deux côtés dudit flasque (72).

14. Semoir selon l'une quelconque des revendications 1 à 13, ***caractérisé en ce* que** le premier dispositif de soufflerie (17) comporte un demi-carter (58) fixé sur une première paroi (52) de manière que le premier ventilateur (24) s'étende entre ledit demi-carter (58) et ladite première paroi (52).

15. Semoir selon la revendication 14, ***caractérisé en ce* que** la première paroi (52), le demi-carter (58) du premier dispositif de soufflerie (17), le premier ventilateur (24) avec un deuxième palier (49) guidant en rotation le premier arbre (25), forment un ensemble fixé sur le châssis (2) au moyen d'éléments de fixation (50).

16. Semoir selon l'une quelconque des revendications 1 à 15, ***caractérisé en ce* que** le deuxième dispositif de soufflerie (18) comporte un demi-carter (74) fixé sur une deuxième paroi (75) de manière que le deuxième ventilateur (33) s'étende entre ledit demi-carter (74) et ladite deuxième paroi (75).

17. Semoir selon la revendication 16, ***caractérisé en ce* que** la deuxième paroi (75), le demi-carter (74) du deuxième dispositif de soufflerie (18) et le deuxième ventilateur (33) forment un ensemble (75, 74, 33) fixé au châssis (2) au moyen d'éléments de fixation (81).

18. Semoir selon la revendication 17, ***caractérisé en ce* que** l'ensemble (75, 74, 33), formé par la deuxième paroi (75), le demi-carter (74) du deuxième dispositif de soufflerie (18) et le deuxième ventilateur (33), peut être déplacé au moins sensiblement orthogonalement à l'axe longitudinal (25a) du premier arbre (25) au moyen d'un deuxième dispositif de réglage (82) de manière à éloigner ou rapprocher ledit ensemble (75, 74, 33) dudit premier arbre (25).

## Claims

1. Sowing machine comprising:
- a chassis (2);
- at least one hopper (9, 12, 20);
- at least one planting element (14, 15);
- a first blowing device (17) containing a first fan (24) secured to a first shaft (25) of longitudinal axis (25a) and driven in rotation about the latter by means of a primary transmission (26);
- a second blowing device (18) containing a second fan (33) secured to a second shaft (34) of longitudinal axis (34a) and driven in rotation about the latter by means of a secondary transmission (36), the longitudinal axis (34a) of the said second shaft (34) being at least substantially parallel to the longitudinal axis (25a) of the said first shaft (25);
***characterized in* that** the said secondary transmission (36) is an endless mechanical transmission.

2. Sowing machine according to Claim 1, ***characterized in* that** the secondary transmission (36) comprises:
- a first wheel (61) secured to the first shaft (25);
- a second wheel (62) secured to the second shaft (34); and
- at least one secondary transmission element (63) providing transmission from the said first wheel (61) to the said second wheel (62).

3. Sowing machine according to Claim 2, ***characterized in* that** the first wheel (61) of the secondary transmission (36) is diametrally larger than the second wheel (62) of the said secondary transmission (36).

4. Sowing machine according to Claim 2 or 3, ***characterized in* that** the second wheel (62) of the secondary transmission (36) is fixed to one (66) of the ends (66, 67) of the second shaft (34) and **in that** the second fan (33) is fixed to the other end (67) of the said second shaft (34).

5. Sowing machine according to any one of Claims 2 to 4, ***characterized in* that** the first wheel (61) of the secondary transmission (36) is fixed to another end (54) of the first shaft (25).

6. Sowing machine according to any one of Claims 1 to 5, ***characterized in* that** the primary transmission (26) is an endless mechanical transmission comprising:
- a first wheel (37) secured to a third shaft (41) intended to be driven in rotation by means of an external power source;
- a second wheel (38) secured to the first shaft (25); and
- at least one primary transmission element (39) providing the transmission from the said first wheel (37) to the said second wheel (38).

7. Sowing machine according to Claim 6, ***characterized in* that** the first wheel (37) of the primary transmission (26) is diametrally larger than the second wheel (38) of the said primary transmission (26).

8. Sowing machine according to Claim 6 or 7, ***characterized in* that** the first wheel (37) of the primary transmission (26) can be moved at least substantially at right angles to the longitudinal axis (25a) of the first shaft (25) by means of a first adjusting device (45) so as to move the said first wheel (37) further away from or closer to the second wheel (38) of the said primary transmission (26).

9. Sowing machine according to Claim 5 and any one of Claims 6 to 8, ***characterized in* that** the first fan (24) is fixed to one (53) of the ends (53, 54) of the first shaft (25) and **in that** the second wheel (38) of the primary transmission (26) is situated between the first wheel (61) of the secondary transmission (36) and the said first fan (24).

10. Sowing machine according to any one of Claims 1 to 9, ***characterized in* that** the second fan (33) is diametrally smaller than the first fan (24).

11. Sowing machine according to any one of Claims 1 to 10, ***characterized in* that** the second fan (33) is situated in the close vicinity of the first fan (24).

12. Sowing machine according to any one of Claims 1 to 11, ***characterized in* that** the first fan (24) comprises a flange (55) and blades (56) extending on one side of the said flange (55).

13. Sowing machine according to any one of Claims 1 to 12, ***characterized in* that** the second fan (33) comprises a flange (72) and blades (73) extending on both sides of the said flange (72).

14. Sowing machine according to any one of Claims 1 to 13, ***characterized in* that** the first blowing device (17) comprises a half-casing (58) fixed to a first wall (52) in such a way that the first fan (24) stretches between the said half-casing (58) and the said first wall (52).

15. Sowing machine according to Claim 14, ***characterized in* that** the first wall (52), the half-casing (58) of the first blowing device (17), the first fan (24) with a second bearing (49) guiding the rotation of the first shaft (25) form an assembly fixed to the chassis (2) by means of fixing elements (50).

16. Sowing machine according to any one of Claims 1 to 15, ***characterized in* that** the second blowing device (18) comprises a half-casing (74) fixed to a second wall (75) in such a way that the second fan (33) stretches between the said half-casing (74) and the said second wall (75).

17. Sowing machine according to Claim 16, ***characterized in* that** the second wall (75), the half-casing (74) of the second blowing device (18) and the second fan (33) form an assembly (75, 74, 33) fixed to the chassis (2) by means of fixing elements (81).

18. Sowing machine according to Claim 17, ***characterized in* that** the assembly (75, 74, 33) formed by the second wall (75), the half-casing (74) of the second blowing device (18) and the second fan (33) can be moved at least substantially at right angles to the longitudinal axis (25a) of the first shaft (25) by means of a second adjusting device (82) so as to move the said assembly (75, 74, 33) further away from or closer to the said first shaft (25).

## Patentansprüche

1. Sämaschine, die
- einen Rahmen (2);
- mindestens einen Trichter (9, 12, 20);
- mindestens ein Einbringelement (14, 15);
- eine erste Gebläsevorrichtung (17), die einen fest mit einer mit einer Längsachse (25a) versehenen ersten Welle (25) verbundenen ersten Ventilator (24) enthält, der mittels eines Primärkraftübertragungssystems (26) um diese Längsachse drehangetrieben wird;
- eine zweite Gebläsevorrichtung (18), die einen fest mit einer mit einer Längsachse (34a) versehenen zweiten Welle (34) verbundenen zweiten Ventilator (33) enthält, der mittels eines Sekundärkraftübertragungssystems (36) um diese Längsachse drehangetrieben wird, wobei die Längsachse (34a) der zweiten Welle (34) zumindest im wesentlichen parallel zur Längsachse (25a) der ersten Welle (25) verläuft;
umfasst,
***dadurch gekennzeichnet,* dass** das Sekundärkraftübertragungssystem (36) ein mechanischer Endlostrieb ist.

2. Sämaschine nach Anspruch 1, ***dadurch gekennzeichnet,* dass** das Sekundärkraftübertragungssystem (36)
- ein mit der ersten Welle (25) fest verbundenes erstes Rad (61);
- ein mit der zweiten Welle (34) fest verbundenes zweites Rad (62); und
- mindestens ein Sekundärkraftübertragungssystemelement (63), das die Kraftübertragung von dem ersten Rad (61) auf das zweite Rad (62) gewährleistet;
umfasst.

3. Sämaschine nach Anspruch 2, ***dadurch gekennzeichnet,* dass** das erste Rad (61) des Sekundärkraftübertragungssystems (36) diametral größer ist als das zweite Rad (62) des Sekundärkraftübertragungssystems (36).

4. Sämaschine nach Anspruch 2 oder 3, ***dadurch gekennzeichnet,* dass** das zweite Rad (62) des Sekundärkraftübertragungssystems (36) an einem (66) der Enden (66, 67) der zweiten Welle (34) befestigt ist und dass der zweite Ventilator (33) am anderen Ende (67) der zweiten Welle (34) befestigt ist.

5. Sämaschine nach irgend einem der Ansprüche 2 bis 4, ***dadurch gekennzeichnet,* dass** das erste Rad (61) des Sekundärkraftübertragungssystems (36) an einem anderen Ende (54) der ersten Welle (25) befestigt ist.

6. Sämaschine nach irgend einem der Ansprüche 1 bis 5, ***dadurch gekennzeichnet,* dass** das Primärkraftübertragungssystem (26) ein mechanischer Endlostrieb ist, der
- ein mit einer dritten Welle (41), die mittels einer äußeren Antriebsquelle drehangetrieben werden soll, fest verbundenes erstes Rad (37);
- ein mit der ersten Welle (25) fest verbundenes zweites Rad (38); und
- mindestens ein Primärkraftübertragungssystemelement (39), das die Kraftübertragung vom ersten Rad (37) auf das zweite Rad (38) gewährleistet;
umfasst.

7. Sämaschine nach Anspruch 6, ***dadurch gekennzeichnet,* dass** das erste Rad (37) des Primärkraftübertragungssystems (26) diametral größer ist als das zweite Rad (38) des Primärkraftübertragungssystems (26).

8. Sämaschine nach Anspruch 6 oder 7, ***dadurch gekennzeichnet,* dass** das erste Rad (37) des Primärkraftübertragungssystems (26) mittels einer ersten Einstellvorrichtung (45) zumindest im wesentlichen orthogonal zur Längsachse (25a) der ersten Welle (25) verschoben werden kann, so dass das erste Rad (37) vom zweiten Rad (38) des Primärkraftübertragungssystems (26) entfernt oder ihm angenähert wird.

9. Sämaschine nach Anspruch 5 und irgend einem der Ansprüche 6 bis 8, ***dadurch gekennzeichnet,* dass** der erste Ventilator (24) an einem (53) der Enden (53, 54) der ersten Welle (25) befestigt ist und sich das zweite Rad (38) des Primärkraftübertragungssystems (26) zwischen dem ersten Rad (61) des Sekundärkraftübertragungssystems (36) und dem ersten Ventilator (24) befindet.

10. Sämaschine nach irgend einem der Ansprüche 1 bis 9, ***dadurch gekennzeichnet,* dass** der zweite Ventilator (33) diametral kleiner ist als der erste Ventilator (24).

11. Sämaschine nach irgend einem der Ansprüche 1 bis 10, ***dadurch gekennzeichnet,* dass** sich der zweite Ventilator (33) in unmittelbarer Nähe des ersten Ventilators (24) befindet.

12. Sämaschine nach irgend einem der Ansprüche 1 bis 11, ***dadurch gekennzeichnet,* dass** der erste Ventilator (24) einen Flansch (55) und sich von einer Seite des Flansches (55) erstreckende Flügel (56) umfasst.

13. Sämaschine nach irgend einem der Ansprüche 1 bis 12, ***dadurch gekennzeichnet,* dass** der zweite Ventilator (33) einen Flansch (72) und sich von beiden Seiten des Flansches (72) erstreckende Flügel (73) umfasst.

14. Sämaschine nach irgend einem der Ansprüche 1 bis 13, ***dadurch gekennzeichnet,* dass** die erste Gebläsevorrichtung (17) eine Gehäusehälfte (58) enthält, die so an einer ersten Wand (52) befestigt ist, dass sich der erste Ventilator (24) zwischen der Gehäusehälfte (58) und der ersten Wand (52) erstreckt.

15. Sämaschine nach Anspruch *14,* ***dadurch gekennzeichnet,* dass** die erste Wand (52), die Gehäusehälfte (58) der ersten Gebläsevorrichtung (17), der erste Ventilator (24) mit einem zweiten Lager (49), das die erste Welle (25) drehbar führt, eine Anordnung bilden, die mittels Befestigungselementen (50) am Rahmen (2) befestigt ist.

16. Sämaschine nach irgend einem der Ansprüche 1 bis 15, ***dadurch gekennzeichnet,* dass** die zweite Gebläsevorrichtung (18) eine Gehäusehälfte (74) enthält, die so an einer zweiten Wand (75) befestigt ist, dass sich der zweite Ventilator (33) zwischen der Gehäusehälfte (74) und der zweiten Wand (75) erstreckt.

17. Sämaschine nach Anspruch 16, ***dadurch gekennzeichnet,* dass** die zweite Wand (75), die Gehäusehälfte (74) der zweiten Gebläsevorrichtung (18) und der zweite Ventilator (33) eine Anordnung (75, 74, 33) bilden, die mittels Befestigungselementen (81) am Rahmen (2) befestigt ist.

18. Sämaschine nach Anspruch 17, ***dadurch gekennzeichnet,* dass** die durch die zweite Wand (75), die Gehäusehälfte (74) der zweiten Gebläsevorrichtung (18) und der zweite Ventilator (33) gebildete Anordnung (75, 74, 33) mittels einer zweiten Einstellvorrichtung (82) zumindest im wesentlichen orthogonal zur Längsachse (25a) der ersten Welle (25) verschoben werden kann, so dass die Anordnung (75, 74, 33) von der ersten Welle (25) entfernt oder ihr angenähert wird.
